# EUROPÄISCHE PATENTSCHRIFT

(11) **EP 2 327 574 B1**
(45) Veröffentlichungstag und Bekanntmachung des Hinweises auf die Patenterteilung: **20.07.2016**
(21) Anmeldenummer: 10191375.4
(22) Anmeldetag: 16.11.2010
(51) Int. Cl.: B60G 17/0195, B62D 6/00, B62D 15/00, B60W 30/18, B60W 30/06

(54) **Verfahren zur Unterstützung eines Fahrers eines Kraftfahrzeugs**
Method to support a driver of a motor vehicle
Procédé destiné à assister un conducteur de véhicule automobile

(30) Priorität: 27.11.2009 DE 102009047248
(43) Veröffentlichungstag der Anmeldung: 01.06.2011
(73) Patentinhaber: Robert Bosch GmbH, 70442 Stuttgart (DE)
(72) Erfinder: Niemz, Volker, 71277 Rutesheim (DE)

(56) Entgegenhaltungen:
- DE-A1- 10 315 965
- DE-A1-102009 001 293

## Beschreibung

### Stand der Technik

Die Erfindung betrifft ein Verfahren zur Unterstützung eines Fahrers eines Kraftfahrzeugs bei einem Fahrmanöver zur Überwindung eines Hindernisses mit einer geringen Geschwindigkeit, wobei das Hindernis eine Höhe aufweist, die von dem Fahrzeug überwunden werden kann.

Mit einer geringen Geschwindigkeit bewegt sich ein Fahrzeug im Allgemeinen bei Rangiermanövern oder bei Fahrmanövern, bei denen es gilt, ein vom Fahrzeug noch zu überfahrendes Hindernis zu überfahren, eine hohe Geschwindigkeit jedoch zu einer Beschädigung des Fahrwerks führen könnte. Derartige Hindernisse sind zum Beispiel stufenförmige Hindernisse wie Bordsteine. Jedoch können auch Balken oder ähnliche Gegenstände entsprechende Hindernisse darstellen.

Insbesondere zum Überfahren eines solchen stufenförmigen Hindernisses ist ein erhöhtes Drehmoment erforderlich, um das Hindernis überwinden zu können. Sobald das Hindernis überwunden wurde, nimmt die Geschwindigkeit aufgrund des hohen Drehmoments stark zu. Um gegebenenfalls eine Kollision mit einem Objekt in der Nähe des Hindernisses zu vermeiden, ist es deshalb notwendig, die entstehende Geschwindigkeit nach Überwindung des Hindernisses sofort zu reduzieren. Hierzu ist derzeit im Allgemeinen ein feinfühliges Agieren des Fahrers des Kraftfahrzeugs erforderlich. Zunächst hat dieser das Fahrpedal des Fahrzeugs so zu betätigen, dass ein ausreichend hohes Drehmoment und damit eine ausreichend hohe Kraft an die Räder übertragen wird, um das Hindernis zu überwinden. Sobald das Hindernis überwunden worden ist, muss der Fahrer vom Fahrpedal zum Bremspedal wechseln, um die Geschwindigkeit des Fahrzeugs auf eine für das Rangiermanöver geeignete Geschwindigkeit reduzieren zu können. Bei einem schrägen Überwinden des Hindernisses kann dies dazu führen, dass dieses Manöver für jedes Rad, mit dem das Hindernis überwunden wird, separat ausgeführt werden muss. Dies führt zu einer erhöhten Konzentrationsanforderung an den Fahrer.

Aus dem Stand der Technik, zum Beispiel aus US-A 2008/0234905, sind lediglich Verfahren bekannt, die einen geeigneten Gang in Abhängigkeit von Geschwindigkeit und Zustand des Fahrwegs einlegen. Der Gang wird dabei so gewählt, dass ein ausreichender Komfort für den Fahrer gewährleistet wird. Diese Systeme eignen sich jedoch nicht zur Unterstützung des Fahrers eines Kraftfahrzeugs bei der Überwindung eines Hindernisses mit einer geringen Geschwindigkeit, insbesondere bei Rangierfahrten. So wird gemäß den bekannten Systemen zwar ein geeigneter Gang eingelegt, jedoch erfolgt keine Verringerung der Geschwindigkeit nach Überwindung des Hindernisses, um zum Beispiel Kollisionen mit Objekten in der Umgebung des Hindernisses zu vermeiden. Insbesondere eignen sich die bekannten Systeme nur für Fahrten auf Straßen oder im Gelände, jedoch nicht für Rangierfahrten wie sie zum Beispiel beim Einparken erforderlich sind.

Aus der DE 103 15 965 A1 ist ein Verfahren zur Vermeidung des Umkippens eines Fahrzeugs bekannt, das sich mit normaler oder erhöhter Geschwindigkeit fortbewegt. Dabei wird ein zu überwindendes Hindernis oder ein weicher Untergrund im Fahrzeugumfeld erkannt und ein automatischen Lenkeingriff ausgeführt, der die Räder derart relativ zu dem Hindernis bzw. dem weichen Untergrund ausrichtet, dass eine Kippgefahr minimiert wird.

### Offenbarung der Erfindung

### Vorteile der Erfindung

Ein erfindungsgemäßes Verfahren zur Unterstützung eines Fahrers eines Kraftfahrzeugs bei einem Fahrmanöver zur Überwindung eines Hindernisses mit einer geringen Geschwindigkeit, wobei das Hindernis eine Höhe aufweist, die von dem Fahrzeug überwunden werden kann, umfasst folgende Schritte:
(a) Übertragung eines hohen Drehmoments oder einer Kraft an die Räder zur Überwindung des Hindernisses,
(b) Erfassen, ob das Hindernis überwunden worden ist,
(c) Reduzieren des Drehmoments oder der an die Räder übertragenen Kraft oder automatisches Abbremsen des Fahrzeugs unmittelbar nach der Überwindung des Hindernisses.

Durch die Reduktion des Drehmoments oder der an die Räder übertragenen Kraft bzw. durch das automatische Abbremsen des Fahrzeugs unmittelbar nach Überwindung des Hindernisses wird ein plötzliches Beschleunigen aufgrund des zur Überwindung des Hindernisses erforderlichen höheren Drehmoments bzw. der für das Überwinden des Hindernisses erforderlichen hohen Kraft auf einen sehr kurzen Zeitraum reduziert oder sogar unterbunden. Um eine für das Rangiermanöver geeignete Geschwindigkeit beizubehalten, kann es dabei auch notwendig sein, das Fahrzeug abzubremsen. Dies ist insbesondere dann notwendig, wenn in unmittelbarer Nähe, zum Beispiel beim Einparken, Objekte sind, mit denen das Fahrzeug bei einer zu hohen Geschwindigkeit nach dem Überwinden des Hindernisses kollidieren kann. Die Kollision kann sich zum Beispiel auch dadurch ergeben, dass aufgrund der erhöhten Geschwindigkeit nach Überwindung des Hindernisses der Abstand zu dem Objekt als Bremsweg nicht mehr ausreichend ist. Durch das erfindungsgemäße Verfahren, bei dem das Drehmoment oder die an die Räder übertragene Kraft reduziert wird oder das Fahrzeug automatisch abgebremst wird, sobald das Hindernis überwunden worden ist, wird sichergestellt, dass der Abstand zu Objekten in der Umgebung des Hindernisses ausreichend groß bleibt, um ein rechtzeitiges Anhalten des Fahrzeugs vor einer möglichen Kollision zu gewährleisten.

Ein weiterer Vorteil des erfindungsgemäßen Verfahrens ist es, dass aufgrund der Reduktion des Drehmoments oder der an die Räder übertragenen Kraft bzw. des automatischen Abbremsens des Fahrzeugs die Geschwindigkeit während des Rangiermanövers im Wesentlichen konstant gehalten werden kann, so dass ein homogeneres Fahrverhalten während des Rangiermanövers realisiert wird. Das Rangiermanöver kann neben dem Einparken des Fahrzeugs zum Beispiel auch ein Ausparken oder ein Überfahren eines Hindernisses, zum Beispiel eines Bordsteins im Bereich einer Einfahrt oder eines auf der Straße liegenden Objekts, welches eine Höhe aufweist, die von dem Fahrzeug überwunden werden kann, sein.

Erfindungsgemäß erfolgt die Überwindung des Hindernisses mit einer geringen Geschwindigkeit, das heißt einer Geschwindigkeit, die im Allgemeinen niedriger ist als 10 km/h. Insbesondere beträgt die Geschwindigkeit während des Fahrmanövers zur Überwindung des Hindernisses Schrittgeschwindigkeit oder weniger.

Um das Hindernis, zum Beispiel ein stufenförmiges Objekt wie ein Bordstein, zu überwinden, wird das Fahrzeug zunächst mit geringer Geschwindigkeit in Richtung des Hindernisses bewegt. Sobald das Hindernis erreicht ist, ist ein erhöhter Kraftaufwand bzw. ein erhöhtes Drehmoment erforderlich, um das Hindernis überwinden zu können. Das entsprechend erforderliche höhere Drehmoment bzw. die zur Überwindung des Hindernisses notwendige Kraft wird an die Räder übertragen. Das Fahrzeug bewegt sich somit mit dem am Hindernis anliegenden Rad über das Hindernis hinweg. Wenn nach dem Überwinden des Hindernisses keine Reduktion der Kraft oder des Drehmoments erfolgt, führt dies zu einer starken Beschleunigung des Fahrzeugs und damit zu einer hohen Geschwindigkeitszunahme. Dies kann jedoch insbesondere beim Einparken in eine Parklücke zu einer Kollision mit einem die Parklücke begrenzenden Objekt, beispielweise einem anderen Fahrzeug, führen. Aus diesem Grund wird erfindungsgemäß das Drehmoment oder die an die Räder übertragene Kraft unmittelbar nach Überwindung des Hindernisses reduziert bzw. das Fahrzeug automatisch abgebremst, um die Geschwindigkeit wieder zu reduzieren bzw. die Geschwindigkeit, mit der das Hindernis überwunden wurde, zu halten.

Um das Drehmoment oder die an die Räder übertragene Kraft unmittelbar nach Überwindung des Hindernisses reduzieren zu können oder das Fahrzeug automatisch abbremsen zu können, ist es notwendig zu erfassen, ob das Hindernis überwunden worden ist. Hierzu ist es zum Beispiel möglich, den Druck in das Hindernis zu überwindenden Reifen zu überwachen. Beim Anfahren an ein stufenförmiges Hindernis wird der Reifen deformiert und hierdurch der Druck im Reifen erhöht. Sobald der Reifen das Hindernis überwunden hat, stellt sich die ursprüngliche Form wieder ein und der Druck senkt sich wieder ab. Somit lässt sich durch einen Abfall des Drucks in den Reifen auf eine Überwindung des Hindernisses schließen. Dies ist jedoch nur dann der Fall, wenn zuvor auch ein Druckanstieg im Reifen detektiert worden ist.

Um anhand des Druckverlaufs in einem Reifen auf die Überwindung eines Hindernisses zu schließen, ist es zum Beispiel möglich, einen typischen Druckverlauf, der sich bei Anfahrt an ein Hindernis und bei Überwindung des Hindernisses einstellt, in einem geeigneten Speicher abzulegen und den während der Überwindung des Hindernisses gemessenen Druckverlauf mit dem hinterlegten Druckverlauf zu vergleichen. Bei einer Ähnlichkeit oder Übereinstimmung ist auf ein Überwinden eines Hindernisses zu schließen.

Insbesondere führt ein Überwinden eines Hindernisses nur zu einer kurzfristigen Änderung des Drucks im Reifen. Nachdem das Hindernis überwunden worden ist, stellt sich wieder ein konstanter Druck ein. Eine weitere Druckabnahme erfolgt nicht. Auf diese Weise kann auch unterschieden werden, ob es sich bei dem gemessenen Druck um eine Druckänderung aufgrund der Überwindung eines Hindernisses handelt oder ob eine Änderung zum Beispiel durch eine Beschädigung des Reifens auftritt.

Alternativ oder zusätzlich zur Überwachung des Drucks in das Hindernis zu überwindenden Reifen ist es auch möglich, den Radfederweg zu erfassen und bei einer Änderung des Radfederwegs auf eine Überwindung des Hindernisses zu schließen. Bei der Überwindung eines Hindernisses wird sich der Radfederweg zunächst verkürzen und anschließend wieder vergrößern. Ein entsprechender Verlauf, der auf das Überwinden eines Hindernisses schließen lässt, kann zum Beispiel ebenfalls in einem geeigneten Speichermedium abgelegt werden und der gemessene Verlauf kann mit dem hinterlegten Verlauf verglichen werden, um auf ein Überwinden eines Hindernisses zu schließen. Alternativ zur Erfassung des Radfederweges ist es auch möglich, auf ein Überwinden des Hindernisses durch ruckartig starke Gradienten in der Längsbeschleunigung und/oder den Nickwinkel des Fahrzeugs zu schließen.

Neben der Überwachung des Drucks in das Hindernis zu überwindenden Reifen oder der Erfassung des Radfederwegs ist es weiterhin auch möglich, auf eine Überwindung des Hindernisses zu schließen, wenn das Fahrpedal in eine Position gebracht wird, die eine Reduzierung der Geschwindigkeit signalisiert oder das Bremspedal betätigt wird. Selbstverständlich ist es auch möglich, neben der Änderung der Position des Fahrpedals oder der Betätigung des Bremspedals auch den Radfederweg zu erfassen und/oder den Druck in das Hindernis zu überwindenden Reifen zu überwachen.

Wenn durch Änderung der Position des Fahrpedals auf eine Überwindung des Hindernisses geschlossen wird, ist es möglich, dass das Drehmoment stärker reduziert wird als dies durch die Bewegung des Fahrpedals üblicherweise erfolgen würde. Zudem ist es möglich, bei der Änderung der Position des Fahrpedals, bei der das Fahrpedal in eine Position gebracht wird, die eine Reduzierung der Geschwindigkeit signalisiert, das Fahrzeug automatisch abzubremsen, um die Geschwindigkeit zu halten, mit der das Hindernis überwunden worden ist.

Eine weitere zusätzliche oder alternative Möglichkeit, zu erfassen, ob das Hindernis überwunden worden ist, kann dadurch erfolgen, dass die Umgebung des Fahrzeugs erfasst wird und anhand der erfassten Daten erkannt wird, dass das Hindernis überwunden ist. Die Erfassung der Umgebung des Fahrzeugs erfolgt dabei mit geeigneten Sensoren, zum Beispiel Abstandssensoren, die üblicherweise im Frontbereich und im Heckbereich des Fahrzeugs angeordnet sind. Abstandssensoren, die eingesetzt werden, sind zum Beispiel Ultraschallsensoren, Radarsensoren, Infrarotsensoren oder LIDAR-Sensoren. Aus den erfassten Daten ist der Abstand des Fahrzeugs zum Hindernis bekannt. Während der Bewegung des Fahrzeugs auf das Hindernis zu wird die Fahrzeugbewegung und/oder die zurückgelegte Strecke erfasst. Hierzu können zum Beispiel Radimpulszähler eingesetzt werden. Sobald die Strecke, die zurückgelegt worden ist, größer ist als die Summe aus dem zuvor erfassten Abstand zwischen Hindernis und Sensor und dem Abstand zwischen Sensor und Rad ist das Hindernis überwunden.

Um ein komfortables Überwinden des Hindernisses zu ermöglichen, insbesondere wenn das Hindernis während eines Einparkvorgangs überwunden werden muss, ist es weiterhin vorteilhaft, wenn die Umgebung des Fahrzeugs während des Fahrmanövers erfasst wird und anhand der erfassten Daten ein zu überfahrendes Hindernis detektiert wird. In diesem Fall ist eine rechtzeitige Vorbereitung auf das Hindernis möglich und ein komfortables Überfahren des Hindernisses kann ermöglicht werden.

Die Detektion eines zu überfahrenden Hindernisses kann zum Beispiel erfolgen, indem einem automatischen Einparksystem mitgeteilt wird, dass ein Parken auf einem Bordstein gewünscht wird. Dies kann zum Beispiel durch eine geeignete Eingabevorrichtung, beispielsweise einen Schalter oder einen berührungsempfindlichen Bildschirm, erfolgen.

Alternativ ist es auch möglich, insbesondere bei einem Einparkmanöver oder beim Einfahren in eine Einfahrt, bei der ein Bordstein zu überwinden ist, ein System zur Erfassung der Umgebung und des Fahrzeugs so zu gestalten, dass auch Bordsteine erkannt werden. Derartige Systeme zur Erfassung der Umgebung des Fahrzeugs sind zum Beispiel Einparksysteme, wie sie bereits in Fahrzeugen eingesetzt werden. Diese verwenden Abstandssensoren im Frontbereich und im Heckbereich des Fahrzeugs und anhand der mit den Abstandssensoren erfassten Daten wird auf Objekte in der Umgebung des Fahrzeugs geschlossen. Üblicherweise eingesetzte Sensoren sind zum Beispiel, wie vorstehend bereits erwähnt, Ultraschallsensoren, Radarsensoren, Infrarotsensoren oder LIDAR-Sensoren. Die Detektion eines Bordsteins kann zum Beispiel erfolgen, indem zunächst in einem Abstand zum Fahrzeug ein Objekt erkannt wird, dieses Objekt jedoch bei Näherung des Fahrzeugs verschwindet. Das Objekt verschwindet aus dem Erfassungsbereich des Sensors, da sich das vom Sensor gesendete Signal im Allgemeinen kegelförmig ausbreitet und somit ein niedriges Objekt wie ein Bordstein erst ab einer bestimmten Entfernung zum Sensor, die sich aus dem Öffnungswinkel des Kegels ergibt, erfasst wird.

Neben der Detektion des Hindernisses durch Erfassung des Umfelds mit Abstandssensoren ist es auch möglich, optische Sensoren einzusetzen. Durch Auswertung der mit den optischen Sensoren empfangenen Signale kann ebenfalls ein Hindernis, das es zu überwinden gilt, erfasst werden.

Zusätzlich oder alternativ zu den genannten Möglichkeiten ist es auch möglich, einen Reifendrucksensor zur Erkennung eines Hindernisses zu verwenden. In diesem Fall wird das Hindernis jedoch erst dann erfasst, wenn der Reifen bereits Kontakt mit dem Hindernis hat. Die Verwendung des Reifendrucksensors bietet sich insbesondere zusätzlich zu den vorstehend genannten Möglichkeiten an, da zunächst mit der Umfelderkennung detektiert wird, dass ein Hindernis vorhanden ist, und mit Hilfe des Reifendrucksensors erkannt wird, wann das Hindernis erreicht wurde.

Weiterhin können zur Detektion eines Hindernisses auch detaillierte Navigationskarten eines Navigationssystems, beispielsweise eines GPS-Systems verwendet werden.

Auch beliebige weitere Systeme, die das Erkennen eines Hindernisses ermöglichen und dem Fachmann bekannt sind, können verwendet werden.

Das erfindungsgemäße Verfahren eignet sich insbesondere zur Unterstützung des Fahrers bei einem Einparkvorgang, bei dem ein Bordstein überwunden werden muss.

### Kurze Beschreibung der Zeichnungen

Ein Ausführungsbeispiel der Erfindung ist in der Zeichnung dargestellt und wird in der nachfolgenden Beschreibung näher erläutert.

Es zeigt:

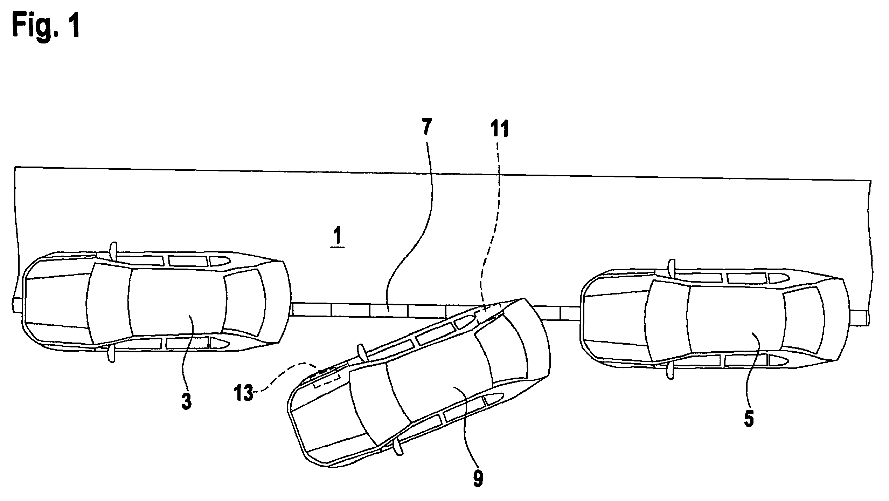

Figur 1 einen Einparkvorgang, bei dem ein Bordstein zu überwinden ist.

### Ausführungsbeispiele der Erfindung

Ein Einparkvorgang, bei dem ein Bordstein zu überwinden ist, ist in Figur 1 dargestellt.

Eine Längsparklücke 1 ist in der hier dargestellten Ausführungsform von einem vorderen Fahrzeug 3 und einem hinteren Fahrzeug 5 begrenzt. Neben der Begrenzung durch das vordere Fahrzeug 3 und das hintere Fahrzeug 5 ist es auch möglich, dass die Längsparklücke 1 nur durch ein vorderes Fahrzeug 3 oder nur durch ein hinteres Fahrzeug 5 begrenzt ist. Weiterhin existieren auch Längsparklücken 1, die weder eine vordere noch eine hintere Begrenzung aufweisen. Neben den Fahrzeugen 3,5 können die vordere Begrenzung und die hintere Begrenzung der Längsparklücke 1 auch durch beliebige andere Objekte, beispielsweise Pflanzen, Pflanzkübel oder ähnliches gebildet werden.

In der Längsparklücke 1 befindet sich ein Bordstein 7, der zum Einparken überwunden werden muss. Die Parkposition ist derart, dass ein Fahrzeug einseitig, das heißt bei der hier dargestellten Längsparklücke 1 mit einem Hinterrad und einem Vorderrad auf der gleichen Seite des Fahrzeugs den Bordstein 7 überwinden muss.

Das Einparken in die Längsparklücke 1 kann durch Vorwärtsfahrt oder Rückwärtsfahrt erfolgen. Insbesondere bei automatisierten Einparksystemen wird der Einparkvorgang bevorzugt in Rückwärtsfahrt durchgeführt.

Um mit einem Fahrzeug 9 in die Längsparklücke 1 einzuparken, wird das Fahrzeug 9 zunächst schräg in die Längsparklücke 1 bewegt. Das Einfahren des Fahrzeugs 9 erfolgt dabei vorzugsweise mit einer konstanten Geschwindigkeit, bis das dem Bordstein 7 zuweisende Hinterrad 11 des Fahrzeugs den Bordstein 7 berührt. Um nun weiter rückwärts in die Längsparklücke 1 einfahren zu können, muss das Hinterrad 11 den Bordstein 7 überwinden. In Abhängigkeit von der Höhe des Bordsteins 7 ist hierzu ein erhöhtes Drehmoment bzw. eine erhöhte Kraft erforderlich. Das zur Überwindung des Bordsteins 7 notwendige erhöhte Drehmoment führt jedoch dazu, dass die Geschwindigkeit des Fahrzeugs 9 stark zunimmt, sobald der Bordstein 7 vom Hinterrad 11 überwunden worden ist. Aufgrund des geringen Abstandes zum hinteren Fahrzeug 5 kann die erhöhte Beschleunigung dazu führen, dass das Fahrzeug 9 nicht mehr rechtzeitig vor einer Kollision mit dem hinteren Fahrzeug 5 angehalten werden kann. Um dies vermeiden wird erfindungsgemäß erfasst, ob das Hindernis überwunden worden ist. Die Erfassung erfolgt zum Beispiel mit Hilfe eines Reifendrucksensors. Anhand des sich ändernden Drucks im Reifen des Hinterrads 11 kann erfasst werden, ob der Bordstein 7 überwunden worden ist. Neben dem Einsatz eines Reifendrucksensors ist es auch möglich, den Radfederweg des Hinterrads 11 zu erfassen und anhand des Radfederwegs den Zeitpunkt zu detektieren, zu dem der Bordstein 7 überwunden ist. Alternativ oder zusätzlich kann der Zeitpunkt, zu dem der Bordstein 7 überwunden worden ist, auch anhand der Stellung des Fahrpedals ermittelt werden. So wird der Fahrer nach Überwinden des Bordsteins 7 das Fahrpedal weniger stark betätigen, gegebenenfalls das Bremspedal betätigen und so anzeigen, dass die Geschwindigkeit des Fahrzeugs reduziert werden soll.

Alternativ oder zusätzlich zu mindestens einer der vorgenannten Alternativen ist es auch möglich, eine Umfeldsensorik einzusetzen, mit der detektiert wird, ob das zu überfahrende Hindernis, in der hier dargestellten Ausführungsform der Bordstein 7, überwunden worden ist.

Um das Fahrzeug 9 in eine Parkposition zwischen dem hinteren Fahrzeug 5 und dem vorderen Fahrzeug 3 zu bringen, muss nach dem Überwinden des Bordsteins 7 mit dem Hinterrad 11 der Bordstein 7 mit dem Vorderrad 13, das sich auf der gleichen Fahrzeugseite befindet wie das Hinterrad 11, überwunden werden. Auch bei Überwindung des Borsteins 7 mit dem Vorderrad 13 ist zunächst zu erfassen, ob das Hindernis, das heißt der Bordstein 7 erreicht wurde. Nach Erreichen des Bordsteins 7 ist wiederrum ein erhöhtes Drehmoment aufzubringen, damit das Vorderrad 13 den Bordstein 7 überwindet. Auch hier ist das zur Überwindung des Bordsteins notwendige Drehmoment von der Höhe des Bordsteins 7 abhängig. Je höher der Bordstein ist, umso höher ist das erforderliche Drehmoment, um den Bordstein 7 zu überwinden.

Da sich das Fahrzeug 9 bei einem üblichen Einparkmanöver zum Zeitpunkt, zu dem Vorderrad 13 den Bordstein 7 überwinden muss noch dichter am hinteren Fahrzeug 5 befindet als bei Überwindung des Bordsteins 7 mit dem Hinterrad 11, ist eine rechtzeitige Verringerung der Beschleunigung, die ein rechtzeitiges Anhalten des Fahrzeugs 9 vor einer Kollision mit dem hinteren Fahrzeug 5 ermöglicht, notwendig.

Neben der Rücknahme des Drehmoments bzw. der an die Räder übertragenen Kraft sobald das Hindernis, in der hier dargestellten Ausführungsform der Bordstein 7, überwunden ist, ist es weiterhin möglich, insbesondere um eine gleichförmige Bewegung des Fahrzeugs 9 zu gewährleisten, dass das Fahrzeug abgebremst wird, sobald das Hindernis überwunden ist. Neben dem Beibehalten einer gleichförmigen Geschwindigkeit kann durch das Abbremsen auch eine Reduzierung der Geschwindigkeit ermöglicht werden. Dies ist insbesondere dann sinnvoll, wenn der Abstand zu einem Objekt in Fahrtrichtung des Fahrzeugs 9 sehr gering ist, wie dies zum Beispiel bei einem Einparkvorgang auftreten kann.

Um zu entscheiden, ob die Geschwindigkeit beibehalten werden soll, oder ob ein Abbremsen des Fahrzeugs und damit eine Verringerung der Geschwindigkeit gewünscht ist, ist es vorteilhaft, den Abstand zu Objekten in der Umgebung des Fahrzeugs 9, insbesondere in Fahrtrichtung des Fahrzeugs 9, zu erfassen. Die Erfassung kann zum Beispiel mit beliebigen Abstandssensoren, beispielsweise Ultraschallsensoren, Radarsensoren, Infrarotsensoren oder LIDAR-Sensoren erfolgen. Systeme, mit denen die Umgebung des Fahrzeugs 9 erfasst wird, sind bereits am Markt zum Beispiel als Einparkhilfesysteme erhältlich.

Das erfindungsgemäße Verfahren kann unabhängig von anderen Systemen zur Unterstützung des Fahrers eingesetzt werden. So ist es zum Beispiel möglich, dass das erfindungsgemäße Verfahren eingesetzt wird, auch wenn der Fahrer das Fahrmanöver, zum Beispiel den Einparkvorgang, selbsttätig übernimmt.

Weiterhin ist es jedoch auch möglich, das erfindungsgemäße Verfahren zum Beispiel in Kombination mit anderen den Fahrer unterstützenden Systemen, zum Beispiel einem Einparkassistentssystem einzusetzen. Bei einem solchen Einparkassistentssystem wird zum Beispiel anhand der zuvor erfassten Umgebungsdaten eine Einparktrajektorie berechnet, entlang der das Fahrzeug 9 in die Längsparklücke 1 einparken soll. Die zum Durchfahren der Trajektorie notwendigen Lenkeingriffe können nun dem Fahrer angezeigt werden und der Fahrer folgt den angezeigten Lenkeinschlägen. Dabei übernimmt der Fahrer zusätzlich auch die Längsführung des Fahrzeugs. Alternativ ist es auch möglich, dass die Lenkeingriffe vom System übernommen werden und der Fahrer nur noch die Längsführung des Fahrzeugs übernimmt. Auch ist es möglich, dass sowohl Längsführung als auch Lenkeingriffe vom System übernommen werden und das Fahrzeug vollautomatisch einparkt. Insbesondere bei einem vollautomatischen Einparken des Fahrzeugs ist es erforderlich, dass das an die Räder übertragene Drehmoment rechtzeitig nach Überwinden des Hindernisses, beispielsweise des Bordsteins 7, reduziert wird und so das Fahrzeug rechtzeitig vor einer Kollision mit einem Objekt zum Stillstand gebracht werden kann.

Insbesondere bei Einparksystem ist es zum Beispiel möglich, dem System vor dem eigentlichen Einparkvorgang einen Hinweis zu geben, dass ein Bordstein beim Einparken überwunden werden muss. Dies ist zum Beispiel über eine Eingabe durch den Fahrer möglich. Die Eingabe kann dabei über beliebige Eingabemittel, beispielsweise einen Schalter, einen Taster oder auch einen berührungssensitiven Bildschirm erfolgen.

Neben der Eingabe durch den Fahrer, dass ein Bordstein 7 zu überfahren ist, ist es alternativ auch möglich, niedrige Hindernisse, die vom Fahrzeug 9 überfahren werden können, beispielsweise ein Bordstein 7, durch eine geeignete Umfelderkennung, beispielsweise mit Hilfe von Ultraschallsensoren, zu erfassen. Neben Ultraschallsensoren können selbstverständlich auch Radarsensoren, Infrarotsensoren oder LIDAR-Sensoren eingesetzt werden. Alternativ zu einem Umfelderfassungssystem zur Erkennung, ob ein zu überfahrendes Hindernis im zu durchfahrenden Weg des Fahrzeugs liegt, kann auch eine Umfelderkennung mit optischen Sensoren durchgeführt werden. Die Annäherung an das Hindernis, beispielsweise den Bordstein 7, kann dann beispielsweise mit Hilfe eines Reifendrucksensors erfolgen, indem durch eine Änderung des Reifendrucks auf die Berührung mit dem Hindernis, beispielsweise dem Bordstein 7, geschlossen wird. Auch können detaillierte Navigationskarten eines Navigationssystem, beispielsweise eines GPS-Systems zur Erkennung, ob ein Bordstein vorhanden ist, eingesetzt werden.

Neben der hier dargestellten Ausführungsform, bei der das Fahrzeug 9 in eine Längsparklücke 1 einfährt, kann das erfindungsgemäße Verfahren zur Unterstützung eines Fahrers eines Kraftfahrzeugs auch eingesetzt werden bei Einparkmanövern in eine Querparklücke, bei der ein Hindernis zu überwinden ist, bei Ein- oder Ausfahrten in bzw. aus einer Einfahrt oder auch dem notwendigen Überfahren eines Hindernisses auf freier Fahrbahn, wobei das Hindernis so ausgestaltet ist, dass dieses überfahren werden kann, das Überfahren jedoch nur mit einer geringen Geschwindigkeit möglich ist.

Insbesondere wenn das zu überfahrende Hindernis beim Einfahren in eine Einfahrt oder beim Ausfahren aus einer Ausfahrt überwunden werden muss oder wenn das zu überfahrende Hindernis beispielsweise auf dem Fahrweg liegt und zur Fortsetzung der Route überfahren werden muss, kann es gewünscht sein, dass nach der Überwindung des Hindernisses keine Reduktion des Drehmoments oder der an die Räder übertragenen Kraft gewünscht ist. Ein entsprechender Fahrerwunsch kann zum Beispiel dadurch geäußert werden, dass der Fahrer das Fahrpedal unverändert weiter betätigt oder sogar eine stärkere Betätigung des Fahrpedals erfolgt und so angezeigt wird, dass der Fahrer eine weitere Beschleunigung des Fahrzeugs wünscht. In diesem Fall wird ein das erfindungsgemäße Verfahren ausführendes System durch den Fahrer des Fahrzeugs überstimmt und der Fahrerwunsch, der eine gleichbleibende Geschwindigkeit oder eine Zunahme der Beschleunigung wünscht, wird durchgeführt.

## Patentansprüche

1. Verfahren zur Unterstützung eines Fahrers eines Fahrzeugs (9) bei einem Rangiermanöver, insbesondere einem Einparkmanöver zur Überwindung eines Hindernisses (7) mit einer geringen Geschwindigkeit, die insbesondere niedriger ist als 10 km/h, wobei das Hindernis (7) eine Höhe aufweist, die von dem Fahrzeug (9) überwunden werden kann, folgende Schritte umfassend:
(a) Übertragen eines hohen Drehmoments oder einer Kraft an die Räder (11, 13) zur Überwindung des Hindernisses (7),
(b) Erfassen, ob das Hindernis (7) überwunden worden ist,
(c) Reduzieren des Drehmoments oder der an die Räder (11, 13) übertragenen Kraft oder automatisches Abbremsen des Fahrzeugs (9) unmittelbar nach Überwindung des Hindernisses (7).

2. Verfahren gemäß Anspruch 1, **dadurch gekennzeichnet, dass** zur Erfassung, ob das Hindernis (7) überwunden worden ist, der Druck in das Hindernis (7) zu überwindenden Reifen (11, 13) überwacht wird und bei einem Abfall des Drucks in den Reifen (11, 13) auf eine Überwindung des Hindernisses (7) geschlossen wird.

3. Verfahren gemäß Anspruch 1 oder 2, **dadurch gekennzeichnet, dass** der Radfederweg erfasst wird und bei einer Änderung des Radfederweges auf eine Überwindung des Hindernisses (7) geschlossen wird.

4. Verfahren gemäß einem der Ansprüche 1 bis 3, **dadurch gekennzeichnet, dass** auf eine Überwindung des Hindernisses (7) geschlossen wird, wenn das Fahrpedal in eine Position gebracht wird, die eine Reduzierung der Geschwindigkeit signalisiert.

5. Verfahren gemäß einem der Ansprüche 1 bis 4, **dadurch gekennzeichnet, dass** die Umgebung des Fahrzeugs (9) erfasst wird und anhand der erfassten Daten erkannt wird, dass das Hindernis (7) überwunden ist.

6. Verfahren gemäß einem der Ansprüche 1 bis 5, **dadurch gekennzeichnet, dass** die Umgebung des Fahrzeugs (9) während des Fahrmanövers erfasst wird und anhand der erfassten Daten ein zu überfahrendes Hindernis (7) detektiert wird.

7. Verfahren gemäß einem der Ansprüche 1 bis 6, **dadurch gekennzeichnet, dass** das Hindernis ein Bordstein (7) ist

## Claims

1. Method for assisting a driver of a vehicle (9) during a manoeuvre, in particular a parking manoeuvre, in order to overcome an obstacle (7) at a low velocity which is, in particular, lower than 10 km/h, wherein the obstacle (7) has a height which can be overcome by the vehicle (9), comprising the following steps:
(a) transmitting a high torque or a force to the wheels (11, 12) in order to overcome the obstacle (7),
(b) detecting whether the obstacle (7) has been overcome, and
(c) reducing the torque or the force transmitted to the wheels (11, 13) or automatically braking the vehicle (9) directly after the overcoming of the obstacle (7).

2. Method according to Claim 1, **characterized in that** in order to detect whether the obstacle (7) has been overcome, the pressure in the tyres (11, 13) which overcome the obstacle (7) is monitored, and in the event of a drop in the pressure in the tyres (11, 13) it is concluded that the obstacle (7) has been overcome.

3. Method according to Claim 1 or 2, **characterized in that** the wheel spring travel is detected, and in the event of a change in the wheel spring travel it is concluded that the obstacle (7) is being overcome.

4. Method according to one of Claims 1 to 3, **characterized in that** it is concluded that the obstacle (7) is being overcome if the accelerator pedal is moved into a position which signals a reduction in the speed.

5. Method according to one of Claims 1 to 4, **characterized in that** the surroundings of the vehicle (9) are sensed, and on the basis of the acquired data it is detected that the obstacle (7) has been overcome.

6. Method according to one of Claims 1 to 5, **characterized in that** the surroundings of the vehicle (9) are sensed during the driving manoeuvre, and an obstacle (7) which is to be driven over is detected on the basis of the acquired data.

7. Method according to one of Claims 1 to 6, **characterized in that** the obstacle is a kerbstone (7).

## Revendications

1. Procédé destiné à assister le conducteur d'un véhicule (9) lors d'une manoeuvre, notamment d'une manoeuvre de stationnement, pour franchir un obstacle (7) à une faible vitesse, qui est notamment inférieure à 10 km/h, dans lequel l'obstacle (7) présente une hauteur qui peut être franchie par le véhicule (9), comprenant les étapes consistant à :
(a) transmettre un couple de rotation élevé ou une force aux roues (11, 13) pour franchir l'obstacle (7),
(b) détecter si l'obstacle (7) a été franchi,
(c) réduire le couple de rotation ou la force transmis aux roues (11, 13) ou freiner automatiquement le véhicule (9) immédiatement après le franchissement de l'obstacle (7).

2. Procédé selon la revendication 1, **caractérisé en ce que**, pour détecter si l'obstacle (7) a été franchi, la pression dans les pneumatiques (11, 13) devant franchir l'obstacle (7) est surveillée et lors d'une diminution de la pression dans les pneumatiques (11, 13), il en est conclu que l'obstacle (7) est franchi.

3. Procédé selon la revendication 1 ou 2, **caractérisé en ce que** la course des ressorts de roues est détectée et, lors d'une variation de la course des ressorts de roues, il en est conclu que l'obstacle (7) est franchi.

4. Procédé selon l'une quelconque des revendications 1 à 3, **caractérisé en ce qu'**il est conclu que l'obstacle (7) est franchi lorsque la pédale d'accélérateur est amenée à une position qui signale une réduction de vitesse.

5. Procédé selon l'une quelconque des revendications 1 à 4, **caractérisé en ce que** l'environnement du véhicule (9) est détecté et **en ce qu'**il est déterminé à partir des données détectées que l'obstacle (7) est franchi.

6. Procédé selon l'une quelconque des revendications 1 à 5, **caractérisé en ce que** l'environnement du véhicule (9) est détecté pendant la manoeuvre de conduite et un obstacle (7) à franchir est détecté sur la base des données détectées.

7. Procédé selon l'une quelconque des revendications 1 à 6, **caractérisé en ce que** l'obstacle est une bordure de trottoir (7).
